# EUROPEAN PATENT SPECIFICATION

(11) **EP 0 520 509 B1**
(45) Date of publication and mention of the grant of the patent: **17.04.1996**
(21) Application number: 92110864.3
(22) Date of filing: 26.06.1992
(51) Int. Cl.: B65D 1/34

(54) **Multilayer multifunctional packing elements and process for preparing the same**
Mehrlagige multifunktionale Verpackungsteile und Verfahren zu deren Herstellung
Eléments d'emballage plurifonctionnels multicouches et procédé pour leur réalisation

(30) Priority: 28.06.1991 IT MI911795
(43) Date of publication of application: 30.12.1992
(73) Proprietor: CENTRO SVILUPPO SETTORI IMPIEGO S.r.l., I-20121 Milan (IT)
(72) Inventor: Addeo, Antonio, I-28100 Novara (IT); Vezzoli, Annibale, I-22060 Carugo, Como (IT); Vestrucci, Gianluigi, I-20154 Milan (IT)
(74) Representative: Zumstein, Fritz, Dr.

(56) References cited:
- EP-A- 0 182 139
- GB-A- 2 199 284
- US-A- 3 932 575

## Description

### Background of the invention:

The present invention relates to thermoformed multilayer and multifunctional packing elements and to the process for preparing the same.

More particularly, it relates to thermoformed packing elements endowed with a high absorption activity toward liquid aqueous substances as well as with barrier properties toward gases such as oxygen and carbon dioxide, prepared by thermoforming a multilayer and multifunctional polymeric system.

According to another aspect, the present invention relates to a process for preparing the above thermoformed packagings, which is free from the use of adhesives and binders dispersed in solvents.

With the term "thermoformed", as utilized in the present description and in the claims, it is intended whatever element structural or not, rigid or flexible, circular or polygonal to be employed in the packing field and, particularly, containers, covers, "food-grade" panels such as, for instance, trays or boxes for the packing of meat, vegetables, fruit or cheese.

At present, the above mentioned articles are usually obtained by the technique of thermoforming starting from thermoplastic sheets which may be coextruded or blown, and are endowed with nearly no absorbing activity of liquid aqueous substances.

According to another technique, an absorbing layer is introduced during the packaging.

Said absorbing layer is usually made of cellulose fiber having high liquid absorbing properties and can be optionally associated with a thin and impermeable drainage layer which is made of plastic material with passing-through perforation.

US-A-3 932 575 discloses a multilayer and multifunctional packing element endowed with high absorbing properties of liquid aqueous substances, which comprises an intermediate absorbing layer coupled with an outer sheet of thermoformed thermoplastic material and with an inner porous layer of thermoformed thermoplastic material.

However, the above packing system shows several disadvantages, one of which is its scarce attitude to be recycled.

### Summary of the invention:

According to the present invention the above discussed drawbacks can be overcome by introducing an absorbing layer between the bottom of the container and a porous drainage layer which is in contact with the packed food product.

The liquid which comes out of the product passes through the porous layer and is uniformely absorbed by the underlying absorbing layer, thus eliminating any free liquid residue.

The multilayer and multifunctional packagings of the present invention have both high absorbing properties of liquid aqueous substances and high impermeability toward gases such as oxygen and carbon dioxide.

The process for preparing the packagings of the invention is free from the use of adhesives and binders dispersed in solvents for the linking of the single layers and is also free from the introduction of absorbing layers during the packaging.

Said process shows several advantages in comparison with the traditional cellulose fiber layer device, such as a much higher productivity and the recyclability of the container.

Moreover, the preparation of the multilayer packaging can be achieved in a unique (In-Line) process, by thermal coupling of a bilayer constituted by the absorbing layer and by the drainage layer with a multilayer sheet having high barrier properties.

The good recyclability of the packaging elements of the invention is due to the use of thermoplastic materials so highly chemically compatible that it is possible to reutilize the production scraps and the eventual post-use ground.

On the contrary, when cellulose fiber layers are utilized, the recyclability is seriously jeopardized due to the heterogeneity of the employed materials.

### BRIEF DESCRIPTION OF THE DRAWINGS:

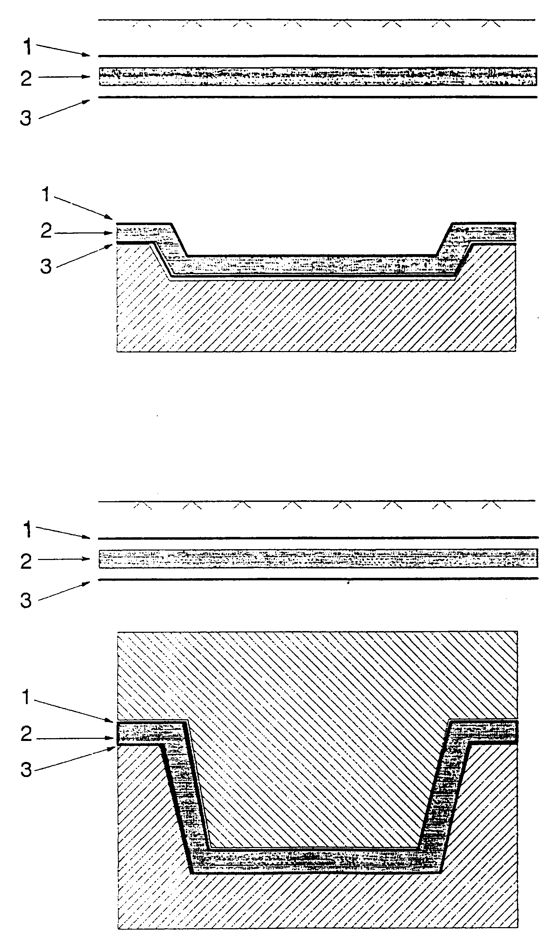

Figure 1 shows, in sectional view, the scheme of the process for preparing a theromomolded packing according to the present invention.

### Detailed description of the invention:

The invention is directed to a multilayer and multifunctional packing element endowed with high absorbing properties of liquid aqueous substances, which comprises an intermediate absorbing layer (2) coupled with an outer sheet (3) of thermoformed thermoplastic material and with an inner porous layer (1) of thermoformed thermoplastic material, characterised in that the intermediate absorbing layer (2) is made of thermoformed thermoplastic material and that the outer sheet (3) has high barrier properties toward gases, endowing the multilayer and multifunctional packing element with high barrier properties toward gases.

The absorbing thermoplastic layer can be constituted by a compact sheet which is rendered absorbent by a suitable formulation of expanded and/or fibrous nature such a needled nonwoven fabric.

Any thermoplastic polymer is suitable to be used for the absorbing layer. Preferred polymers are acrylic and/or meta-acrilic resins, polypropylene, shock-resistant polypropylene and its derivates.

No particular limitation exists for the outer sheet, save that it is made of thermoplastic polymers.

Examples of said polymers are polystyrol, shock-resistant polystyrol, styrenic alloys such as ABS, SAN, etc., polyvinylchloride, high, medium and low density polyethylene, polypropylene, shock-resistant polypropylene, cristalline copolymers, ethylene/propylene acrylic and/or meta-acrylic resins, polymeta-acrylates, polyester resins such as PET, PBT.

Preferred polymers are polystyrol, shock-resistant polystyrol, styrenic alloys, polypropylene and shock-resistant polypropylene.

As regards the inner high porosity thin layer for the drainage of the liquid, it can be made of any thermoplastic polymer.

According to another aspect, the present invention relates to a process for preparing thermoformed packing elements comprising the steps of coupling outer sheet (3) of thermoplastic material, inner porous layer (1) of thermoplastic material for the drainage of the liquid and intermediate layer (2) having high absorption activity toward liquid aqueous substances, heating thus obtained thermoplastic multilayer sheet to a temperature equal or slightly higher than its softening point, thermoforming the thermoplastic multilayer sheet by means of a conventional technique,
characterised in that the coupling comprises the following steps:
(a) coupling on the outer sheet (3), endowed with high barrier properties toward gases, an intermediate layer (2) of thermoplastic material;
(b) coupling on said intermediate layer the inner layer (1), thus obtaining a thermoplastic multilayer sheet.

In the thermoforming process a suitable finish of the rims has to be created so that, once the food product has been packed, a further thin film having high barrier properties toward gases can be settled on the food and thermoformed on the rims.

In order to achieve the thermoforming, the multilayer thermoplastic sheet, having average thickness ranging from 0.2 to 5 mm, is heated to a temperature close to the softening point by means of known techniques, for instance by infra-red irradiation or by electrically heated plates.

The choice of said temperature depends on the employed polymer and is generally higher than 100°C, preferably ranging from 120 to 200°C.

The thermoforming of the multilayer thermoplastic sheet can be performed by means of different conventional techniques. For instance, vacuum can be applied in the mold if this has a low drawing ratio, or a counter-mold can be used which contributes to form the sheet.

The accompanying drawing describes, by way of example, one embodiment of the invention.

The operation of the process results apparent from the drawing and from the description of the invention.

The intermediate absorbing layer 2 is coupled with the outer sheet 3 having high barrier properties and with inner high porosity thin layer 1, thus obtaining a multilayer sheet which is then thermoformed.

### EXAMPLE

An experimental polypropylene felt made by the Italian company Moplefan, having a weight of 220 g/m² and a thickness of about 4 mm, characterized by a high absorbing power for aqueous liquid substances was coupled on a 35 micron thick polypropylene film by passing it through a three cylinders calendering line.

The polypropylene film was highly porous owing to through microdrilling made by the mechanical action of hot needles during the cast extrusion process. The film used in the experiments with good results had 36 microdrillings per square inch, each of them with a diameter of 400 micron. The microdrilled film was prepared with Hifax® 7036, a polypropylene type made by the company Himont. Coupling of the polypropylene felt on the microdrilled film was accomplished by surface melting in the passage through the three cylinders calendering line. More in detail, adhesion was obtained in the pasage between the lower cylinder, kept at a room temperature of 25°C, and the cylinder in the middle heated up to a temperature of 135°C.

The bilayer obtained from absorbing felt and microdrilled film was subsequently coupled on a multilayer sheet endowed with high barrier properties toward gases. Coupling of the bilayer on the multilayer sheet was accomplished in line after the preparation of the multilayer by a coextrusion process.

More in detail, the following polymers: a) Moplen® EP2530B, a random polypropilene made by the company Himont; b) Clarene® R-20, an EVOH polymer (ethylene-vinyl alcohol copolymer); and c) a polyolefinic adhesivizing polymer, were fed into a coextrusion line made by Colines and working with a three extruders Cloeren system.

The multilayer sheet of the type PP/adhesive/EVOH/adhesive/PP with a thickness of the layers respectively 350/15/25/15/350 micron, coming out of a head with a rectangular slit of 1000 x 1.0 mm heated up to a temperature of 200°C, was conveyed into a three cylinders calendering system which is normally intended for the cooling of the sheet. The bilayer felt/microdrilled film was let adhere to the multilayer sheet at the input of the three cylinders calendering system before the cooling phase. Adhesion was accomplished by melting of the outer layer of the felt on the sheet. Aiming at avoiding an excessive melting of the absorbing polypropylene felt, the contact time must be short.

The most convenient way to adjust the contact time at high temperature is based on the control of the temperature of the three cylinders which normally define the cooling rate of the sheet. In connection to this the temperature of the three cylinders was set at the following values: lower cylinder 60°C, middle cylinder 80°C, upper cylinder 60°C. At the end of the extrusion process a multilayer element consisting of a sheet endowed with high barrier properties toward gases, an absorbing felt and a microdrilled film was built into a bobbin.

The molding of the multilayer element was made using a discontinuous laboratory moulding machine VFM of 550 x 450 mm size, using a tray mould of 235 x 175 mm size and a depth of 40 mm. The computed volume of the tray is 1,650 cm³. Heating of the multilayer element was carried out only from the side of the sheet endowed with high barrier properties toward gases (outer side of the tray) by using an infrared radiating panel set at a 350°C temperature and placed at a distance of about 15 cm from the sheet. The element was heated for a time of 25 seconds up to a temperature of about 145°C and then shaped in the mould by using a countermould and making vacuum through a few holes made in the mould.

After cutting, the thermomoulded tray outlined in Fig.1 was physically tested for absorbing power and permeability. The following values were obtained:

| | |
|---|---|
| - Size: | 235 x 175 x 40 mm |
| - Area: | 740 cm² |
| - Volume | 1650 cm³ |
| - Water absorption | 12 cm³/dm² |
| - Permeability as gas transmitted (TR) through the whole tray: | |
| O_{2TR} | 2.4 cm³ 24 h atm |
| CO_{2TR} | 10 cm³ 24 h atm |

## Claims

1. A multilayer and multifunctional packing element endowed with high absorbing properties of liquid aqueous substances, which comprises an intermediate absorbing layer (2) coupled with an outer sheet (3) of thermoformed thermoplastic material and with an inner porous layer (1) of thermoformed thermoplastic material,
characterised in that the intermediate absorbing layer (2) is made of thermoformed thermoplastic material and that the outer sheet (3) has high barrier properties toward gazes, endowing the multilayer and multifunctional packing element with high barrier properties toward gases.

2. A packing element according to claim 1, wherein the intermediate absorbing layer (2) is of a polymeric thermoplastic material selected from the group consisting of acrylic resins, meta-acrylic resins, polypropylene, expanded polypropylene, fibrous polypropylene and expanded fibrous polypropylene.

3. A packing element according to claim 1, wherein the outer layer (3) is a sheet or an assembling of one or more thermoplastic polymers which are compatible with the other polyiners employed in the preparation of the packing element.

4. A packing element according to claim 1, wherein the outer layer (3) has average thickness ranging front 0.2 to 5 mm.

5. A packing element according to claim 1, having the shape of a tray or box for the packing of meat, vegetables, fruit of cheese.

6. A process for preparing thermoformed packing elements comprising the steps of coupling outer sheet (3) of thermoplastic material, inner porous layer (1) of thermoplastic material for the drainage of the liquid and intermediate layer (2) having high absorption activity toward liquid aqueous substances, heating thus obtained thermoplastic multilayer sheet to a temperature equal or slightly higher than its softening point, thermoforming the thermoplastic multilayer sheet by means of a conventional technique,
characterised in that the coupling comprises the following steps:
(a) coupling on the outer sheet (3), endowed with high barrier properties toward gases, an intermediate layer (2) of thermoplastic material;
(b) coupling on said intermediate layer the inner layer (1), thus obtaining a thermoplastic multilayer sheet.

7. A process according to claim 6, wherein the thermoplastic multilayer sheet has average thickness ranging from 0,2 to 5 mm.

8. A process according to claim 6, wherein the temperature of step (c) is higher than 100°C.

9. A process according to claim 8, wherein said temperature ranges from 120 to 200°C.

## Patentansprüche

1. Mehrlagiges multifunktionales Verpackungsteil, ausgestattet mit stark absorbierenden Eigenschaften für flüssige, wässerige Stoffe, das eine absorbierende Zwischenschicht (2), verbunden mit einer äußeren Folie (3) aus warmgeformtem thermoplastischem Material und mit einer inneren porösen Schicht (1) aus warmgeformtem thermoplastischem Material umfaßt, dadurch gekennzeichnet, daß die absorbierende Zwischenschicht (2) aus warmgeformtem thermoplastischem Material hergestellt ist und daß die äußere Folie (3) starke Sperreigenschaften gegen Gase aufweist, die dem mehrlagigen und multifunktionalen Verpackungsteil starke Sperreigenschaften gegen Gase verleiht.

2. Verpackungsteil nach Anspruch 1, wobei die absorbierende Zwischenschicht (2) ein thermoplastisches Polymermaterial ist, ausgewählt aus der Gruppe, bestehend aus Acrylharzen, Methacrylharzen, Polypropylen, geschäumtem Polypropylen, faserförmigem Polypropylen und geschäumtem faserförmigem Polypropylen.

3. Verpackungsteil nach Anspruch 1, wobei die äußere Schicht (3) eine Folie oder eine Anordnung von ein oder mehreren thermoplastischen Polymeren ist, die mit den bei der Herstellung des Verpackungsteils eingesetzten anderen Polymeren verträglich sind.

4. Verpackungsteil nach Anspruch 1, wobei die äußere Schicht (3) eine mittlere Dicke im Bereich von 0,2 bis 5 mm aufweist.

5. Verpackungselement nach Anspruch 1 in Schalen- oder Kistenform zum Verpacken von Fleisch, Gemüse, Obst oder Käse.

6. Verfahren zur Herstellung von warmgeformten Verpackungsteilen, umfassend die Schritte Verbinden einer äußeren Folie (3) aus thermoplastischem Material, einer inneren porösen Schicht (1) aus thermoplastischem Material zum Abfließenlassen der Flüssigkeit und einer Zwischenschicht (2) mit stark absorbierender Wirkung für flüssige wässerige Stoffe, Erwärmen der so erhaltenen thermoplastischen mehrlagigen Folie auf eine Temperatur gleich oder wenig höher als ihr Erweichungspunkt, Warmformen der thermoplastischen mehrlagigen Folie durch ein übliches Verfahren, dadurch gekennzeichnet, daß das Verbinden die nachstehenden Schritte umfaßt:
(a) Verbinden der äußeren Folie (3), die mit starken Sperreigenschaften gegen Gase ausgestattet ist, mit einer Zwischenschicht (2) aus thermoplastischem Material;
(b) Verbinden der Zwischenschicht mit der inneren Schicht (1), wodurch somit eine thermoplastische mehrlagige Folie erhalten wird.

7. Verfahren nach Anspruch 6, wobei die thermoplastische mehrlagige Folie eine mittlere Dicke im Bereich von 0,2 bis 5 mm aufweist.

8. Verfahren nach Anspruch 6, wobei die Temperatur von Schritt (c) höher als 100°C ist.

9. Verfahren nach Anspruch 8, wobei die Temperatur im Bereich von 120 bis 200°C liegt.

## Revendications

1. Un élément d'emballage multicouche et multifonctionnel doté de fortes propriétés absorbantes vis-à-vis des substances aqueuses liquides, qui comprend une couche absorbante intermédiaire (2) associée à une feuille externe (3) d'une matière thermoplastique thermoformée et à une couche poreuse interne (1) de matière thermoplastique thermoformée, caractérisé en ce que la couche absorbante intermédiaire (2) est faite d'une matière thermoplastique thermoformée et que la feuille externe (3) présente des propriétés de barrage élevées vis-à-vis des gaz, conférant à l'élément d'emballage multicouche et multifonctionnel des propriétés de barrage élevées vis-à-vis des gaz.

2. Un élément d'emballage selon la revendication 1, dans lequel la couche absorbante intermédiaire (2) est faite d'une matière thermoplastique polymère choisie dans le groupe consistant en résines acryliques, résines méta-acryliques, polypropylène, polypropylène expansé, polypropylène fibreux et polypropylène fibreux expansé.

3. Un élément d'emballage selon la revendication 1, dans lequel la couche externe (3) est une feuille d'emballage d'un ou plusieurs polymères thermoplastiques compatibles avec les autres polymères utilisés pour la préparation de l'élément d'emballage.

4. Un élément d'emballage selon la revendication 1, dans lequel la couche externe (3) présente une épaisseur moyenne comprise entre 0,2 et 5 mm.

5. Un élément d'emballage selon la revendication 1, présentant la forme d'un plateau ou d'une boîte pour l'emballage de viande, légumes, fruit ou fromage.

6. Un procédé de fabrication d'élément d'emballage thermoformé comprenant les étapes de couplage d'une feuille externe (3) d'un matériau thermoplastique, une couche interne poreuse (1) de matière thermoplastique pour le drainage des liquides et une couche intermédiaire (2) présentant une forte activité d'absorption vis-à-vis des substances liquides aqueuses, le chauffage de la feuille multicouche thermoplastique ainsi obtenue à une température égale ou légèrement supérieure à son point de ramollissement, le thermoformage de la feuille multicouche thermoplastique à l'aide de technique classique,
caractérisé en ce que le couplage comprend les étapes suivantes:
(a) couplage, avec la feuille externe (3), dotée de hautes propriétés de barrage vis-à-vis des gaz, d'une couche intermédiaire (2) de matière thermoplastique;
(b) couplage, avec ladite couche intermédiaire d'une couche interne (1) pour obtenir ainsi une feuille multicouche thermoplastique.

7. Un procédé selon la revendication 1, dans lequel la feuille multicouche thermoplastique présente une épaisseur moyenne comprise entre 0,2 et 5 mm.

8. Un procédé selon la revendication 6, dans lequel la température de l'étape (c) est supérieure à 100°C.

9. Un procédé selon la revendication 8, dans lequel ladite température est comprise entre 120 et 200°C.
